# EUROPEAN PATENT SPECIFICATION

(11) **EP 4 125 200 B1**
(45) Date of publication and mention of the grant of the patent: **06.03.2024**
(21) Application number: 22275102.6
(22) Date of filing: 21.07.2022
(51) Int. Cl.: H02M 1/32, H02M 7/162, H02M 7/521

(54) **IMPROVEMENTS IN OR RELATING TO LINE COMMUTATED CONVERTERS**
VERBESSERUNGEN AN ODER IM ZUSAMMENHANG MIT NETZGEFÜHRTEN UMRICHTERN
AMELIORATIONS APPORTÉS OU SE RAPPORTANT AUX CONVERTISSEURS À COMMUTATION PAR LE RÉSEAU

(30) Priority: 28.07.2021 GB 202110831
(43) Date of publication of application: 01.02.2023
(73) Proprietor: General Electric Technology GmbH, 5400 Baden (CH)
(72) Inventor: WHITEHOUSE, Robert, Stafford, ST16 1WS (GB); BARKER, Carl, Stafford, ST16 1WS (GB); KHILAR, Sunita, Stafford, ST16 1WS (GB)
(74) Representative: Openshaw & Co.

(56) References cited:
- JP-A- S5 148 118
- US-A- 5 099 409
- US-A1- 2019 187 201

## Description

This invention relates to a line commutated converter and to a method of operating such a converter.

In high voltage direct current (HVDC) power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks.

The conversion between DC power and AC power is utilised where it is necessary to interconnect DC and AC networks. In any such power transmission network, converters (i.e. power converters) are required at each interface between AC and DC power to effect the required conversion from AC to DC or from DC to AC.

One such type of power converter is a line commutated converter, which includes switching elements that typically can only be turned on. As a consequence, line commutated converters rely on voltage changes in an AC network with which it is, in use, connected, in order to effect the commutation, i.e. switching, from one switching element to another during the aforementioned power conversion process.

The following documents are prior art to the present application: JPS5148118, US5099409 and US11355912.

According to a first aspect of the invention there is provided a line commutated converter comprising:
a plurality of converter limbs extending between first and second DC terminals connected in-use to a DC network, each converter limb including first and second limb portions separated by an AC terminal connected in-use to a respective phase of an AC network, and each limb portion having a switching element connected between a respective AC terminal and a corresponding one of the first or the second DC terminal; and
a controller programmed to in-use control operation of the converter and to monitor during operation of the converter a DC converter current flowing between the first and second DC terminals and an AC converter current flowing between respective pairs of AC terminals,
the controller, while the DC converter and AC converter currents are equal to one another, operating the converter in a normal mode during which the controller sets a first firing angle for each switching element, the first firing angle being greater than ninety degrees to operate the converter as an inverter,
the controller, when a fault occurs temporarily causing the DC converter current to exceed the AC converter current, operating the converter in a fault detection and mitigation mode during which the controller:
   sets a second firing angle for each switching element, the second firing angle being less than ninety degrees to operate the converter as a rectifier;
   checks whether operating the converter as a rectifier causes the AC converter current to exceed the DC converter current; and
      (i) bypasses the converter if the AC converter current exceeds the DC converter current, or
      (ii) sets a third firing angle for each switching element, the third firing angle being greater than ninety degrees but reduced relative to the first firing angle to operate the converter as an inverter with a reduced power transfer capability, if the AC converter current does not exceed the DC converter current.

Having a controller which is configured in the foregoing manner, i.e. which operates a line commutated converter in a fault detection and mitigation mode in the event of a fault which temporarily causes a DC converter current to exceed an AC converter current, is especially advantageous because such a controller is firstly able to identify when a fault has occurred, and secondly is able to distinguish between different types of fault which might give rise to such an increase in DC converter current, and is therefore able to take the most appropriate form of mitigating action when such a fault does occur.

More particularly, when the originating fault is caused by a flash-over across a single converter limb, the DC converter current flowing from the DC network bypasses the converter limb, and hence bypasses the converter, and as a consequence the AC converter current flowing into the AC network falls to zero.

Hence the DC converter current exceeds the AC converter current, and the controller is able to detect that a fault has occurred.

Similarly, when the originating fault is caused by commutation failure, e.g. where a disturbance in the voltages of the AC network adversely effects commutation, i.e. switching, from one switching element to another within the converter, the DC converter current flowing from the DC network simply flows through a converter limb and not into the AC network.

Hence the DC converter current again exceeds the AC converter current, and the controller likewise is able to detect that a fault has occurred.

Meanwhile, the inclusion of a controller which sets a second firing angle that is less than ninety degrees, desirably causes the converter to temporarily operate as a rectifier which temporarily converts AC power to DC power.

In circumstances where the originating fault is caused by the aforementioned flash-over, the flash-over creates a temporary current path and so operating the converter as a rectifier creates the opportunity to force a significant AC converter current I_{ac} to flow through respective switching elements 28 of the converter 10 and into the flash-over 32. Providing the second firing angle is suitably smaller than ninety degrees, the resulting, significant AC converter current I_{ac} will be greater than the DC converter current mentioned above which flows through the flash-over when it originates. As a result the controller is able to characterise the type of originating fault, i.e. because the AC converter current exceeds the DC converter current, and thereby take the correct remedial action, i.e. bypassing the converter so that the flash-over current transfers out of the flash-over arc and back into the converter switching elements.

In contrast, where the originating fault is caused by commutation failure, operating the converter as a rectifier causes the converter to consume reactive power without generating a significant AC converter current. The absence of such a significant AC converter current permits the controller to again characterise the type of originating fault, i.e. because the AC converter current does not exceed the DC converter current, as thereby again take the correct remedial action, i.e. setting a third firing angle for each switching element (which is greater than ninety degrees but reduced relative to the first firing angle) so that the converter reverts to operating as an inverter, but one with a reduced power transfer capability (i.e. when compared to the DC power to AC power transfer capability provided when the switching elements operate at the first firing angle), and thereby assists the converter to recover from the commutation failure.

Preferably the controller sets the second firing angle to operate the converter as a rectifier for a first duration, and the controller sets the third firing angle to operate the converter as an inverter with a reduced power transfer capability for a second duration which is longer than the first duration.

Having the converter operate as a rectifier for a first, shorter duration is desirable because if the originating fault was a commutation failure, which typically is due to voltage disturbances in an associated AC network, operating the converter as a rectifier for too long would otherwise result in excessive reactive power consumption by the converter which, in turn, would create further disturbances in the AC network, and thus be likely to exacerbate the originating commutation failure.

Meanwhile, operating the converter as an inverter with a reduced power transfer capability for a second, longer duration is beneficial since this assists recovery of the converter, as well as increasing the likelihood of riding out whatever AC network fault is causing the voltage disturbances.

Optionally the first duration is not more than a single operating cycle of the converter.

Such a first, shorter duration, while advantageously helping to minimise any excessive reactive power consumption by the converter, and hence minimise the creation of further disturbances in the AC network, is nevertheless still long enough to permit the detection of a flash-over fault, i.e. through the short generation of a significant AC converter current and the rapid subsequent detection of such an AC converter current exceeding the DC converter current, and thereby take the correct mitigating action, i.e. bypassing the converter so that the flash-over current transfers out of the flash-over arc and back into the converter switching elements.

The second duration may be at least one hundred milliseconds.

Such a second, longer duration allows a reasonable amount of time for the converter to recover from a commutation failure, and/or for a contributing AC network fault to be resolved, and thereby reduces the likelihood of there ultimately being an inconvenient and undesirable interruption in the transfer of power from the DC network to the AC network.

Preferably, at the end of the second duration, if the DC converter current continues to exceed the AC converter current, the controller disconnects the converter from the AC network.

Such a feature advantageously ensures the converter is ultimately protected from damage by a persistent fault, e.g. within the AC network, which lasts longer than a typical AC network fault which might otherwise resolve itself.

According to a second aspect of the invention there is provided a method of operating a line commutated converter comprising a plurality of converter limbs extending between first and second DC terminals connected in-use to a DC network, each converter limb including first and second limb portions separated by an AC terminal connected in-use to a respective phase of an AC network, and each limb portion having a switching element connected between a respective AC terminal and a corresponding one of the first or the second DC terminal; and a controller programmed to in-use control operation of the converter and to monitor during operation of the converter a DC converter current flowing between the first and second DC terminals and an AC converter current flowing between respective pairs of AC terminals, the method comprising the steps of:
(a) while the DC converter and AC converter currents are equal to one another, operating the converter in a normal mode during which the controller sets a first firing angle for each switching element, the first firing angle being greater than ninety degrees to operate the converter as an inverter; and
(b) when a fault occurs which temporarily causes the DC converter current to exceed the AC converter current, operating the converter in a fault detection and mitigation mode during which the controller:
   sets a second firing angle for each switching element, the second firing angle being less than ninety degrees to operate the converter as a rectifier;
   checks whether operating the converter as a rectifier causes the AC converter current to exceed the DC converter current; and
      (i) bypasses the converter if the AC converter current exceeds the DC converter current, or
      (ii) sets a third firing angle for each switching element, the third firing angle being greater than ninety degrees but reduced relative to the first firing angle to operate the converter as an inverter with a reduced power transfer capability, if the AC converter current does not exceed the DC converter current.

The method of the invention shares the benefits of the corresponding features of the line commutated converter of the invention.

It will be appreciated that the use of the terms "first" and "second", and the like, in this patent specification is merely intended to help distinguish between similar features (e.g. the first and second DC terminals, and the first and second limb portions), and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

There now follows a brief description of preferred embodiments of the invention, by way of non-limiting example, with reference being made to the following figures in which:
Figure 1 shows a schematic view of a line commutated converter according to a first embodiment of the invention operating in a normal mode;
Figure 2(a) shows a schematic view of the line commutated converter shown in Figure 1 operating in a first stage of a fault detection and mitigation mode after a first fault arises;
Figure 2(b) shows a schematic view of the line commutated converter shown in Figure 2(a) operating in a second stage of the fault detection and mitigation mode after a first type of fault arises; and
Figure 3 shows a schematic view of the line commutated converter shown in Figure 1 operating in the fault detection and mitigation mode after a second type of fault arises.

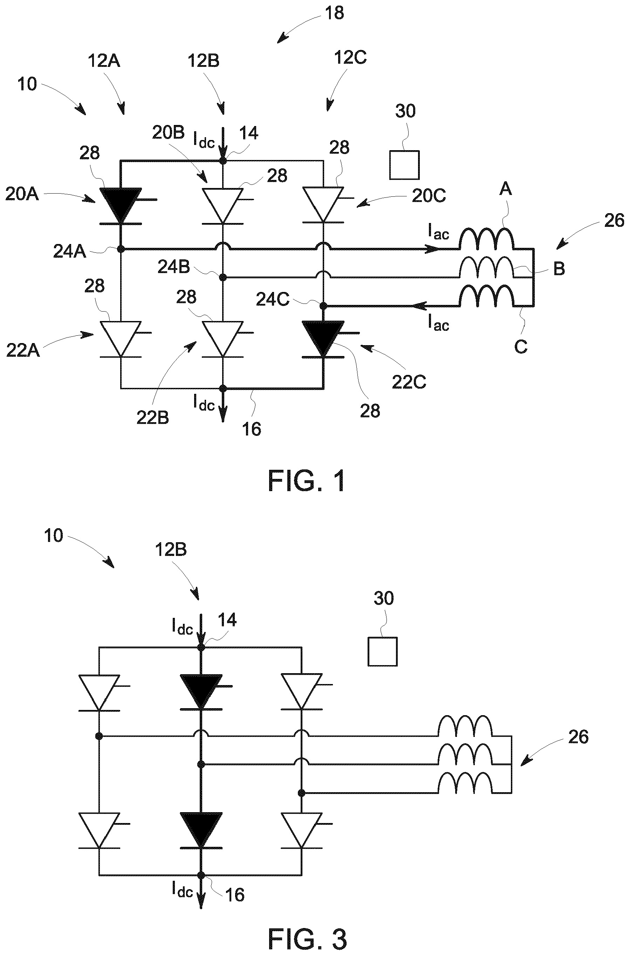

A line commutated converter according to a first embodiment of the invention is designated generally by reference numeral 10, as shown in Figure 1.

The converter 10 includes a plurality of converter limbs 12A, 12B, 12C which extend between first and second DC terminals 14, 16 that, in use, are connected to a DC network 18.

Each converter limb 12A, 12B, 12C includes first and second limb portions 20A, 20B, 20C, 22A, 22B, 22C that are separated by a corresponding AC terminal 24A, 24B, 24C which, in use, is connected a respective phase A, B, C of an AC network 26.

Meanwhile, each limb portion 20A, 20B, 20C, 22A, 22B, 22C has a switching element 28 which is connected between a respective AC terminal 24A, 24B, 24C and a corresponding one of the first or the second DC terminal 14, 16. In the embodiment shown, each switching element 28 is a thyristor, although other types of line commutated switching element, such a mercury-arc valve could be used.

The line commutated converter 10 also includes a controller 30 which is programmed to, in use, control operation of the converter 10 and to monitor, during operation of the converter 10, a DC converter current I_{dc} which flows between the first and second DC terminals 14, 16 and an AC converter current I_{ac} which flows between respective pairs of AC terminals 24A, 24B, 24C.

While the DC converter and AC converter currents I_{dc}, I_{ac} are equal to one another, i.e. when the magnitude of the AC converter current I_{ac} is commensurate with the DC converter current I_{dc}, the controller 30 is programmed to operate the converter 10 in a normal mode, as shown in Figure 1.

During such a mode the controller 30 sets a first firing angle, i.e. a first time delay from the point at which a DC voltage across a switching element becomes positive (at which point a thyristor, or other line commutated switching element, would start to conduct) and the switching element 28 being turned on, for each switching element 28.

More particularly, during the normal mode the controller 30 sets a first firing angle which is greater than ninety degrees, and thereby operates the converter 10 as an inverter, i.e. as a converter 10 which converts DC power to AC power.

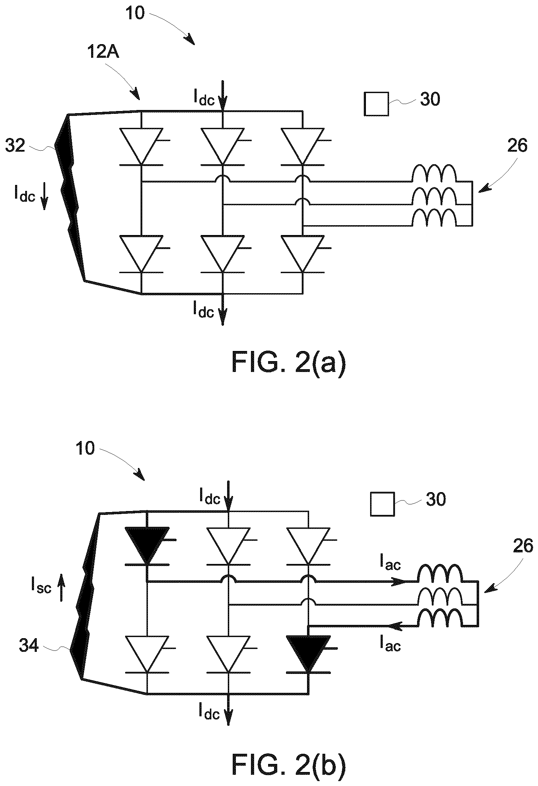

When a fault occurs that temporarily causes the DC converter current I_{dc} to exceed the AC converter current I_{ac}, i.e. causes the DC converter current I_{dc} to temporarily exceed the magnitude of the AC converter current I_{ac}, the converter 10 is programmed to operate the converter 10 in a fault detection and mitigation mode, as shown in Figures 2(a), 2(b), and 3.

For example, when a fault is caused by a flash-over 32 across a single converter limb 12A, the DC converter current I_{dc} flowing from the DC network 18 bypasses the converter limb 12A, and hence bypasses the converter 10 entirely, as shown in Figure 2(a). As a consequence, the AC converter current I_{ac} flowing into the AC network 26 falls to zero which, in turn, results in the DC converter current I_{dc} temporarily exceeding the AC converter current I_{ac}.

In these circumstances, the controller 30 operates the converter 10 in the aforementioned fault detection and mitigation mode by first of all setting a second firing angle for each switching element 28.

The second firing angle is less than ninety degrees, and thereby causes the converter 10 to operate as a rectifier, i.e. as a converter 10 which converts AC power to DC power.

The controller 30 is further programmed to then check whether operating the converter 10 as a rectifier causes the AC converter current I_{ac}, i.e. the magnitude of the AC converter current I_{ac}, to exceed the DC converter current I_{dc} and, if the magnitude of the AC converter current I_{ac} does exceed the DC converter current I_{dc}, the controller 30 is still further programmed to bypass the converter 10.

In the above-described example where the fault is caused by a flash-over 32, the flash-over 32 creates a temporary current path 34, and so operating the converter 10 as a rectifier creates the opportunity to force a significant AC converter current I_{ac} to flow through respective switching elements 28 of the converter 10 and into the flash-over 32 as shown, i.e. as a short circuit current I_{sc}, in Figure 2(b).

More particularly, providing the second firing angle is suitably smaller than ninety degrees, i.e. less than ninety degrees to a desired extent (noting that the closer the second firing angle moves towards zero degrees the larger the resulting AC converter current I_{ac} becomes), the resulting, significant AC converter current I_{ac} will be greater than the DC converter current I_{dc} which flows through the flash-over 32 when it originates. Consequently the controller 30 is able to characterise the type of originating fault, i.e. because the magnitude of the AC converter current I_{ac} exceeds the DC converter current I_{dc}, and thereby is able take the correct remedial action of bypassing the converter, so that the flash-over current transfers out of the flash-over 32 arc and back into the converter switching elements 28.

In contrast when, for example, the fault is caused by commutation failure, e.g. where a disturbance in the voltages of the AC network 26 adversely effects commutation, i.e. switching, from one switching element 28 to another within the converter 10, the DC converter current I_{dc} flowing from the DC network 18 simply flows through a converter limb 12B and not into the AC network 26, as shown in Figure 3.

Hence no AC converter current I_{ac} flows, and so the DC converter current I_{dc} again exceeds the AC converter current I_{ac}.

In these circumstances, the controller 30 again operates the converter 10 in the aforementioned fault detection and mitigation mode by setting the second firing angle to close to, but less than, ninety degrees, to thereby again cause the converter 10 to operate as a rectifier, i.e. as a converter 10 which converts AC power to DC power.

As above, the controller 30 again checks whether operating the converter 10 as a rectifier causes the AC converter current I_{ac} to exceed the DC converter current I_{dc}.

However, when the originating fault is caused by commutation failure, operating the converter 10 as a rectifier causes the converter 10 to consume reactive power without generating a significant AC converter current I_{ac}. In particular, operating the converter 10 with a large (but less than ninety degrees) second firing angle, results in it creating only a small DC voltage across the first and second DC terminals 14, 16. This small DC voltage will, in use, be applied via the DC network 18 to a remote converter (not shown), which will act to limit the consequential current. Hence, the resulting AC converter current I_{ac} that flows through the faulted converter 10 will be insignificant.

Meanwhile, the DC converter current I_{dc} flowing through the converter 10 will consist of two components: a first component generated by the aforementioned insignificant AC converter current I_{ac}, and a second component driven by the remote converter.

The second component of DC converter current Idc, i.e. that driven by the remote converter, is significant and can be easily monitored by the controller 30. Hence the measured DC converter current I_{dc} flowing through the converter 10 will be larger than the magnitude of the insignificant AC converter current I_{ac}, i.e. the magnitude of the AC converter current I_{ac} will not exceed the DC converter current I_{dc}, and so the controller 30 is able once more to characterise the type of originating fault, and thereafter take the correct remedial action.

More particularly in the foregoing circumstances i.e. when the magnitude of the AC converter current I_{ac} does not exceed the DC converter current I_{dc} while the converter 10 is temporarily operating as a rectifier, the controller 30 is programmed to set a third firing angle for each switching element 28.

The third firing angle is greater than ninety degrees, but reduced relative to the first firing angle, and so the controller 30 controls the converter 10 to revert to operating as an inverter, but one with a reduced power transfer capability, i.e. when compared to the DC power to AC power transfer capability provided when the switching elements 28 operate at the first firing angle.

An example third firing angle would be one greater than 120 degrees, although other third firing angles are also possible. In any event, operating the converter 10 as an inverter with a reduced power transfer capability assists the converter 10 to recover from a commutation fault, while also reducing reactive power consumption.

In addition to the foregoing, the controller 30 is programmed to set the second firing angle to operate the converter 10 as a rectifier for a first duration, and set the third firing angle to operate the converter 10 as an inverter, with a reduced power transfer capability, for a second duration.

The second duration is longer than the first duration, and more particularly the first duration is preferably not more than a single operating cycle of the converter, and the second duration is at least one hundred milliseconds, and preferably several hundred milliseconds.

Furthermore, the controller 30 is additionally programmed so that, at the end of the second duration if the DC converter current I_{dc} continues to exceed the magnitude of the AC converter current I_{ac}, the controller disconnects the converter 10 from the AC network 26.

Such a first, shorter duration, advantageously helps to minimise any excessive reactive power consumption by the converter 10, and hence minimises the creation of further disturbances in the AC network 26 which might otherwise exacerbate the commutation fault.

However, such a first duration is still long enough to permit the detection of a flash-over fault, i.e. through the short generation of a significant AC converter current I_{ac} and the rapid subsequent detection of the magnitude of such an AC converter current I_{ac} exceeding the DC converter current I_{dc}, which typically takes less than 2 milliseconds.

Meanwhile, such a second, longer duration allows a reasonable amount of time for the converter 10 to recover from a commutation failure, and/or for a contributing AC network fault to be resolved, and thereby reduces the likelihood of the controller taking the further step of disconnecting the converter 10 from the AC network 26, which would otherwise cause an inconvenient and undesirable interruption in the transfer for power from the DC network 18 to the AC network 26.

In other words, the controller 30 is programmed so that it only takes the draconian step of disconnecting the converter 10 from the AC network in the face of persistent commutation failures, e.g. due to prolonged AC network faults, which last longer than the second duration, i.e. typically longer than several hundred milliseconds.

## Claims

1. A line commutated converter (10) comprising:
a plurality of converter limbs (12A, 12B, 12C) extending between first and second DC terminals (14, 16) connected in-use to a DC network (18), each converter limb (12A, 12B, 12C) including first and second limb portions (20A, 20B, 20C, 22A, 22B, 22C) separated by an AC terminal (24A, 24B, 24C) connected in-use to a respective phase (A, B, C) of an AC network (26), and each limb portion (20A, 20B, 20C, 22A, 22B, 22C) having a switching element (28) connected between a respective AC terminal (24A, 24B, 24C) and a corresponding one of the first or the second DC terminal (14, 16); and
a controller (30) programmed to in-use control operation of the converter (10) and to monitor during operation of the converter (10) a DC converter current (I_{dc}) flowing between the first and second DC terminals (14, 16) and an AC converter current (I_{ac}) flowing between respective pairs of AC terminals (24A, 24B, 24C),
the controller (30), while the DC converter and AC converter currents (I_{dc}, I_{ac}) are equal to one another, operating the converter (10) in a normal mode during which the controller (10) is configured to set
a first firing angle for each switching element (28), the first firing angle being greater than ninety degrees to operate the converter (10) as an inverter,
the controller (30), when a fault occurs temporarily causing the DC converter current (I_{dc}) to exceed the AC converter current (I_{ac}), operating the converter (10) in a fault detection and mitigation mode during which the controller (30) is configured to :
set a second firing angle for each switching element (28), the second firing angle being less than ninety degrees to operate the converter (10) as a rectifier;
check whether operating the converter (10) as a rectifier causes the AC converter current (I_{ac}) to exceed the DC converter current (I_{dc}); and
(i) to bypass the converter (10) if the AC converter current (I_{ac}) exceeds the DC converter current (I_{dc}), or
(ii) to set a third firing angle for each switching element (28), the third firing angle being greater than ninety degrees but reduced relative to the first firing angle to operate the converter (10) as an inverter with a reduced power transfer capability, if the AC converter current (I_{ac}) does not exceed the DC converter current (I_{dc}).

2. A line commutated converter (10) according to Claim 1 wherein the controller (30) is configured to set the second firing angle to operate the converter (10) as a rectifier for a first duration, and the controller (30) is configured to set the third firing angle to operate the converter (10) as an inverter with a reduced power transfer capability for a second duration which is longer than the first duration.

3. A line commutated converter (10) according to Claim 2 wherein the first duration is not more than a single operating cycle of the converter (10).

4. A line commutated converter (10) according to Claim 2 or Claim 3 wherein the second duration is at least one hundred milliseconds.

5. A line commutated converter (10) according to any of Claims 2 to 4 wherein at the end of the second duration, if the DC converter current (I_{dc}) continues to exceed the AC converter current (I_{ac}), the controller is configured to disconnect the converter (10) from the AC network (26).

6. A method of operating a line commutated (10) converter comprising a plurality of converter limbs (12A, 12B 12C) extending between first and second DC terminals (14, 16) connected in-use to a DC network (18), each converter limb (12A, 12B 12C) including first and second limb portions (20A, 20B, 20C, 22A, 22B, 22C) separated by an AC terminal (24A, 24B, 24C) connected in-use to a respective phase (A, B, C) of an AC network (26), and each limb portion (20A, 20B, 20C, 22A, 22B, 22C) having a switching element (28) connected between a respective AC terminal (24, 24B, 24C) and a corresponding one of the first or the second DC terminal (14, 16); and a controller (30) programmed to in-use control operation of the converter (10) and to monitor during operation of the converter (10) a DC converter current (I_{dc}) flowing between the first and second DC terminals (14, 16) and an AC converter current (I_{dc}) flowing between respective pairs of AC terminals (24A, 24B, 24C), the method comprising the steps of:
(a) while the DC converter and AC converter currents (I_{dc}, I_{ac}) are equal to one another, operating the converter (10) in a normal mode during which the controller (30) sets a first firing angle for each switching element (28), the first firing angle being greater than ninety degrees to operate the converter (10) as an inverter; and
(b) when a fault occurs which temporarily causes the DC converter current (I_{dc}) to exceed the AC converter current (I_{ac}), operating the converter (10) in a fault detection and mitigation mode during which the controller (30):
sets a second firing angle for each switching element (28), the second firing angle being less than ninety degrees to operate the converter (10) as a rectifier;
checks whether operating the converter (10) as a rectifier causes the AC converter current (I_{ac}) to exceed the DC converter current (I_{dc}); and
(i) bypasses the converter (10) if the AC converter current (I_{ac}) exceeds the DC converter current (I_{dc}), or
(ii) sets a third firing angle for each switching element (28), the third firing angle being greater than ninety degrees but reduced relative to the first firing angle to operate the converter (10) as an inverter with a reduced power transfer capability, if the AC converter current (I_{ac}) does not exceed the DC converter current (I_{ac}).

## Patentansprüche

1. Netzgeführter Umrichter (10), umfassend:
eine Vielzahl von Umrichterschenkeln (12A, 12B, 12C), die sich zwischen ersten und zweiten Gleichstromanschlüssen (14, 16) erstrecken, die im Betrieb mit einem Gleichstromnetz (18) verbunden sind, wobei jeder Umrichterschenkel (12A, 12B, 12C) erste und zweiten Schenkelabschnitte (20A, 20B, 20C, 22A, 22B, 22C) beinhaltet, die durch einen Wechselstromanschluss (24A, 24B, 24C) getrennt sind, der im Betrieb mit einer entsprechenden Phase (A, B, C) eines Wechselstromnetzes (26) verbunden ist, und wobei jeder Schenkelabschnitt (20A, 20B, 20C, 22A, 22B, 22C) ein Schaltelement (28) aufweist, das zwischen einem jeweiligen Wechselstromanschluss (24A, 24B, 24C) und einem entsprechenden des ersten oder des zweiten Gleichstromanschlusses (14, 16) verbunden ist; und
eine Steuereinheit (30), die dazu programmiert ist, den Betrieb des Umrichters (10) im Betrieb zu steuern und während des Betriebs des Umrichters (10) einen Gleichstrom-Umrichterstrom (I_{dc}), der zwischen dem ersten und dem zweiten Gleichstromanschluss (14, 16) fließt, und einen Wechselstrom-Umrichterstrom (I_{ac}), der zwischen jeweiligen Paaren von Wechselstromanschlüssen (24A, 24B, 24C) fließt, zu überwachen,
wobei die Steuereinheit (30), während die Gleichstrom-Umrichter- und Wechselstrom-Umrichterströme (I_{dc}, I_{ac}) einander gleichen, den Umrichter (10) in einem Normalmodus betreibt, in dem die Steuereinheit (30) dazu konfiguriert ist, einen ersten Zündwinkel für jedes Schaltelement (28) einzustellen, wobei der erste Zündwinkel größer als neunzig Grad ist, um den Umrichter (10) als einen Wechselrichter zu betreiben,
die Steuereinheit (30), wenn vorübergehend ein Fehler auftritt, der den Gleichstrom-Umrichterstrom (I_{dc}) veranlasst, den Wechselstrom-Umrichterstrom (I_{ac}) zu übersteigen, den Umrichter (10) in einem Fehlererkennungs- und -minderungsmodus betreibt, in dem die Steuereinheit (30) konfiguriert ist zum:
Einstellen eines zweiten Zündwinkels für jedes Schaltelement (28), wobei der zweite Zündwinkel weniger als neunzig Grad beträgt, um den Umrichter (10) als einen Gleichrichter zu betreiben;
Überprüfen, ob das Betreiben des Umrichters (10) als einen Gleichrichter den Wechselstrom-Umrichterstrom (I_{ac}) dazu veranlasst, den Gleichstrom-Umrichterstrom (I_{dc}) zu übersteigen; und
(i) Umgehen des Umrichters (10), wenn der Wechselstrom-Umrichterstrom (I_{ac}) den Gleichstrom-Umrichterstrom (I_{dc}) übersteigt, oder
(ii) Einstellen eines dritten Zündwinkels für jedes Schaltelement (28), wobei der dritte Zündwinkel größer als neunzig Grad ist, jedoch relativ zum ersten Zündwinkel verringert ist, um den Umrichter (10) als einen Wechselrichter mit einer reduzierten Leistungsübertragungsfähigkeit zu betreiben, wenn der Wechselstrom-Umrichterstrom (I_{ac}) den Gleichstrom-Umrichterstrom (I_{dc}) nicht übersteigt.

2. Netzgeführter Umrichter (10) nach Anspruch 1, wobei die Steuereinheit (30) dazu konfiguriert ist, den zweiten Zündwinkel einzustellen, um den Umrichter (10) für eine erste Zeitspanne als einen Gleichrichter zu betreiben, und die Steuereinheit (30) dazu konfiguriert ist, den dritten Zündwinkel einzustellen, um den Umrichter (10) für eine zweite Zeitspanne, die länger als die erste Zeitspanne ist, als einen Wechselrichter mit einer reduzierten Leistungsübertragungsfähigkeit zu betreiben.

3. Netzgeführter Umrichter (10) nach Anspruch 2, wobei die erste Zeitspanne nicht mehr als einen einzelnen Betriebszyklus des Umrichters (10) beträgt.

4. Netzgeführter Umrichter (10) nach Anspruch 2 oder Anspruch 3, wobei die zweite Zeitspanne mindestens einhundert Millisekunden beträgt.

5. Netzgeführter Umrichter (10) nach einem der Ansprüche 2 bis 4, wobei am Ende der zweiten Zeitspanne, wenn der Gleichstrom-Umrichterstrom (I_{dc}) weiterhin den Wechselstrom-Umrichterstrom (I_{ac}) übersteigt, die Steuereinheit dazu konfiguriert ist, den Umrichter (10) vom Wechselstromnetz (26) zu trennen.

6. Verfahren zum Betreiben eines netzgeführten Umrichters (10), der eine Vielzahl von Umrichterschenkeln (12A, 12B, 12C) umfasst, die sich zwischen ersten und zweiten Gleichstromanschlüssen (14, 16) erstrecken und im Betrieb mit einem Gleichstromnetz (18) verbunden sind, wobei jeder Umrichterschenkel (12A, 12B, 12C) erste und zweite Schenkelabschnitte (20A, 20B, 20C, 22A, 22B, 22C) beinhaltet, die durch einen Wechselstromanschluss (24A, 24B, 24C) getrennt sind, der im Betrieb mit einer jeweiligen Phase (A, B, C) eines Wechselstromnetzes (26) verbunden ist, und jeder Schenkelabschnitt (20A, 20B, 20C, 22A, 22B, 22C) ein Schaltelement (28) aufweist, das zwischen einem entsprechenden Wechselstromanschluss (24, 24B, 24C) und einem entsprechenden des ersten oder des zweiten Gleichstromanschlusses (14, 16) verbunden ist; und eine Steuereinheit (30), die dazu programmiert ist, den Betrieb des Umrichters (10) im Betrieb zu steuern und während des Betriebs des Umrichters (10) einen Gleichstrom-Umrichterstrom (I_{dc}), der zwischen dem ersten und dem zweiten Gleichstromanschluss (14, 16) fließt, und einen Wechselstrom-Umrichterstrom (I_{dc}), der zwischen jeweiligen Paaren von Wechselstromanschlüssen (24A, 24B, 24C) fließt, zu überwachen, wobei das Verfahren die folgenden Schritte umfasst:
(a) während die Gleichstrom-Umrichter- und Wechselstrom-Umrichterströme (I_{dc}, I_{ac}) einander gleichen, Betreiben des Umrichters (10) in einem Normalmodus, in dem die Steuereinheit (30) einen ersten Zündwinkel für jedes Schaltelement (28) einstellt, wobei der erste Zündwinkel größer als neunzig Grad ist, um den Umrichter (10) als einen Wechselrichter zu betreiben; und
(b) wenn ein Fehler auftritt, der den Gleichstrom-Umrichterstrom (I_{dc}) vorübergehend veranlasst, den Wechselstrom-Umrichterstrom (I_{ac}) zu übersteigen, Betreiben des Umrichters (10) in einem Fehlererkennungs- und -minderungsmodus, in dem die Steuereinheit (30):
einen zweiten Zündwinkel für jedes Schaltelement (28) einstellt, wobei der zweite Zündwinkel weniger als neunzig Grad beträgt, um den Umrichter (10) als einen Gleichrichter zu betreiben;
überprüft, ob das Betreiben des Umrichters (10) als einen Gleichrichter den Wechselstrom-Umrichterstrom (I_{ac}) dazu veranlasst, den Gleichstrom-Umrichterstrom (I_{dc}) zu übersteigen; und
(i) den Umrichter (10) umgeht, wenn der Wechselstrom-Umrichterstrom (I_{ac}) den Gleichstrom-Umrichterstrom (I_{dc}) übersteigt, oder
(ii) einen dritten Zündwinkel für jedes Schaltelement (28) einstellt, wobei der dritte Zündwinkel größer als neunzig Grad ist, jedoch relativ zum ersten Zündwinkel verringert ist, um den Umrichter (10) als einen Wechselrichter mit einer reduzierten Leistungsübertragungsfähigkeit zu betreiben, wenn der Wechselstrom-Umrichterstrom (I_{ac}) den Gleichstrom-Umrichterstrom (I_{dc}) nicht übersteigt.

## Revendications

1. Convertisseur à commutation par réseau (10) comprenant :
une pluralité de branches de convertisseur (12A, 12B, 12C) s'étendant entre des première et seconde bornes CC (14, 16) raccordées en utilisation à un réseau CC (18), chaque branche de convertisseur (12A, 12B, 12C) incluant des première et seconde parties de branche (20A, 20B, 20C, 22A, 22B, 22C) séparées par une borne CA (24A, 24B, 24C) raccordée en utilisation à une phase respective (A, B, C) d'un réseau CA (26), et chaque partie de branche (20A, 20B, 20C, 22A, 22B, 22C) présentant un élément de commutation (28) monté entre une borne CA respective (24A, 24B, 24C) et une correspondante parmi la première ou la seconde borne CC (14, 16) ; et
un dispositif de commande (30) programmé pour commander, en utilisation, le fonctionnement du convertisseur (10) et pour surveiller pendant le fonctionnement du convertisseur (10) un courant de convertisseur CC (I_{dc}) circulant entre les première et seconde bornes CC (14, 16) et un courant de convertisseur CA (I_{ac}) circulant entre des paires respectives de bornes CA (24A, 24B, 24C),
le dispositif de commande (30), en même temps que les courants de convertisseur CC et de convertisseur CA (I_{dc}, I_{ac}) sont égaux l'un à l'autre, faisant fonctionner le convertisseur (10) dans un mode normal pendant lequel le dispositif de commande (10) est configuré pour définir un premier angle d'amorçage pour chaque élément de commutation (28), le premier angle d'amorçage étant supérieur à quatre-vingt-dix degrés pour faire fonctionner le convertisseur (10) en tant qu'onduleur,
le dispositif de commande (30), lorsque survient défaut amenant temporairement le courant de convertisseur CC (I_{dc}) à dépasser le courant de convertisseur CA (I_{ac}), faisant fonctionner le convertisseur (10) dans un mode de détection et d'atténuation de défaut pendant lequel le dispositif de commande (30) est configuré pour :
définir un deuxième angle d'amorçage pour chaque élément de commutation (28), le deuxième angle d'amorçage étant inférieur à quatre-vingt-dix degrés pour faire fonctionner le convertisseur (10) en tant que redresseur ;
vérifier si le fonctionnement du convertisseur (10) en tant que redresseur amène le courant de convertisseur CA (I_{ac}) à dépasser le courant de convertisseur CC (I_{dc}) ; et
(i) contourner le convertisseur (10) si le courant de convertisseur CA (I_{ac}) dépasse le courant de convertisseur CC (I_{dc}), ou
(ii) définir un troisième angle d'amorçage pour chaque élément de commutation (28), le troisième angle d'amorçage étant supérieur à quatre-vingt-dix degrés mais réduit par rapport au premier angle d'amorçage pour faire fonctionner le convertisseur (10) en tant qu'onduleur avec une capacité de transfert de puissance réduite, si le courant de convertisseur CA (I_{ac}) ne dépasse pas le courant de convertisseur CC (I_{dc}).

2. Convertisseur à commutation par réseau (10) selon la revendication 1, dans lequel le dispositif de commande (30) est configuré pour définir le deuxième angle d'amorçage pour faire fonctionner le convertisseur (10) en tant que redresseur pendant une première durée, et le dispositif de commande (30) est configuré pour définir le troisième angle d'allumage pour faire fonctionner le convertisseur (10) en tant qu'onduleur avec une capacité de transfert de puissance réduite pendant une seconde durée qui est plus longue que la première durée.

3. Convertisseur à commutation par réseau (10) selon la revendication 2, dans lequel la première durée est inférieure ou égale à un seul cycle de fonctionnement du convertisseur (10).

4. Convertisseur à commutation par réseau (10) selon la revendication 2 ou la revendication 3, dans lequel la seconde durée est d'au moins cent millisecondes.

5. Convertisseur à commutation par réseau (10) selon l'une quelconque des revendications 2 à 4, dans lequel, à la fin de la seconde durée, si le courant de convertisseur CC (I_{dc}) continue de dépasser le courant de convertisseur CA (I_{ac}), le dispositif de commande est configuré pour déconnecter le convertisseur (10) du réseau CA (26).

6. Procédé de fonctionnement d'un convertisseur à commutation par réseau (10) comprenant une pluralité de branches de convertisseur (12A, 12B, 12C) s'étendant entre des première et seconde bornes CC (14, 16) raccordées en utilisation à un réseau CC (18), chaque branche de convertisseur (12A, 12B, 12C) incluant des première et seconde parties de branche (20A, 20B, 20C, 22A, 22B, 22C) séparées par une borne CA (24A, 24B, 24C) raccordée en utilisation à une phase respective (A, B, C) d'un réseau CA (26), et chaque partie de branche (20A, 20B, 20C, 22A, 22B, 22C) présentant un élément de commutation (28) monté entre une borne CA respective (24, 24B, 24C) et une correspondante parmi la première ou la seconde borne CC (14, 16) ; et un dispositif de commande (30) programmé pour commander, en utilisation, le fonctionnement du convertisseur (10) et pour surveiller pendant le fonctionnement du convertisseur (10) un courant de convertisseur CC (I_{dc}) circulant entre les première et seconde bornes CC (14, 16) et un courant de convertisseur CA (I_{dc}) circulant entre des paires respectives de bornes CA (24A, 24B, 24C), le procédé comprenant les étapes de :
(a) en même temps que les courants de convertisseur CC et de convertisseur CA (I_{dc}, I_{ac}) sont égaux l'un à l'autre, fonctionnement du convertisseur (10) dans un mode normal pendant lequel le dispositif de commande (30) définit un premier angle d'amorçage pour chaque élément de commutation (28), le premier angle d'amorçage étant supérieur à quatre-vingt-dix degrés pour faire fonctionner le convertisseur (10) en tant qu'onduleur ; et
(b) lorsque survient un défaut qui amène temporairement le courant de convertisseur CC (I_{dc}) à dépasser le courant de convertisseur CA (I_{ac}), fonctionnement du convertisseur (10) dans un mode de détection et d'atténuation de défaut pendant lequel le dispositif de commande (30) :
définit un deuxième angle d'amorçage pour chaque élément de commutation (28), le deuxième angle d'amorçage étant inférieur à quatre-vingt-dix degrés pour faire fonctionner le convertisseur (10) en tant que redresseur ;
vérifie si le fonctionnement du convertisseur (10) en tant que redresseur amène le courant de convertisseur CA (I_{ac}) à dépasser le courant de convertisseur CC (I_{dc}) ; et
(i) contourne le convertisseur (10) si le courant de convertisseur CA (I_{ac}) dépasse le courant de convertisseur CC (I_{dc}), ou
(ii) définit un troisième angle d'amorçage pour chaque élément de commutation (28), le troisième angle d'amorçage étant supérieur à quatre-vingt-dix degrés mais réduit par rapport au premier angle d'amorçage pour faire fonctionner le convertisseur (10) en tant qu'onduleur avec une capacité de transfert de puissance réduite, si le courant de convertisseur CA (I_{ac}) ne dépasse pas le courant de convertisseur CC (I_{ac}).
